## Europäisches Patentamt

## European Patent Office

## Office européen des brevets

(11) Veröffentlichungsnummer: **0 038 488**
**B1**

# EUROPÄISCHE PATENTSCHRIFT

(45) Veröffentlichungstag der Patentschrift:
31.08.88

(21) Anmeldenummer: **81102731.7**

(22) Anmeldetag: **10.04.81**

(51) Int. Cl.⁴: **B 31 B 17/00,** B 23 P 19/00,
B 26 F 1/38, B 65 D 3/10

(54) Verfahren zum Herstellen eines flüssigkeitsdichten Behälters.

(30) Priorität: **19.04.80 DE 3015112**

(43) Veröffentlichungstag der Anmeldung:
**28.10.81 Patentblatt 81/43**

(45) Bekanntmachung des Hinweises auf die Patenterteilung:
**31.08.88 Patentblatt 88/35**

(84) Benannte Vertragsstaaten:
**AT BE CH DE FR GB IT LI LU NL SE**

(56) Entgegenhaltungen:
**DE-A-1 729 018
DE-C-472 416
DE-C-744 128
FR-A-589 937
FR-A-2 067 660
FR-A-2 167 559
GB-A-683 206
GB-A-875 886
US-A-1 929 770**

(73) Patentinhaber: **Maschinenfabrik Rissen GmbH,
Marschweg 100, D-2000 Hamburg 56 (DE)**
Patentinhaber: **4P Nicolaus Kempten GmbH, Ulmer
Strasse 18, D-8960 Kempten (DE)**

(72) Erfinder: **Schmidt, Werner, Hufner Strasse 7, 2000
Hamburg 76 (DE)**

(74) Vertreter: **Hutzelmann, Gerhard, Duracher Strasse
22, D-8960 Kempten (DE)**

## Beschreibung

Die vorliegende Erfindung betrifft ein Verfahren zum Herstellen eines flüssigkeitsdichten Behälters aus einem im wesentlichen rechteckigen Kartonzuschnitt od.dgl. mittels eines Karussells mit mehreren gleichen, drehbar gelagerten Dornen, die je mit in einer Axiallinie am Umfang liegenden Saugöffnungen versehen sind, wobei der Kartonzuschnitt um einen Dorn gewickelt und längs einer Längsnaht durch Siegeln verschlossen wird und ebenfalls flüssigkeitsdicht mit einem Boden versehen ist (vgl. die FR-A-2 167 559), wobei der Boden aus einer versteifenden, die gesamte Bodenfläche einnehmenden Lage und einer über die erste hinausragenden zweiten Lage gebildet ist.

Es ist bekannt, beispielsweise mit Polyäthylen beschichteten Karton für einen solchen Behälter zu verwenden. Schwierigkeiten bereitet dabei die Dichtigkeit der Längsnaht, und zwar besonders die Schnittkante und das Gestalten und Einsetzen des Bodens.

Zur Abdichtung der Längsnaht wurde in der AT-C-241 956 vorgeschlagen, einen Abdeckstreifen auf der Innenseite der Längsnaht, die Schnittkante abdeckend, vorzusehen.

Der Erfindung liegt die Aufgabe zugrunde, ein Verfahren zu schaffen, mit dem in rationeller Weise ein derartiger flüssigkeitsdichter Behälter mit Abdeckstreifen und ebenfalls flüssigkeitsdicht eingesetztem Boden herstellbar ist.

Diese Aufgabe wird erfindungsgemäß durch die im Kennzeichen des Anspruches angegebenen Maßnahmen gelöst.

Hierdurch wird erreicht, daß das Einbringen und Versiegeln des Abdeckstreifens sowie das verhältnismäßig komplizierte Einbringen und Ansiegeln des Bodens vollautomatisch abläuft.

Dadurch wird eine weitere Rationalisierung der Behälterherstellung erzielt, wobei gleichzeitig der Produktionsprozeß vereinfacht wird.

In der Zeichnung sind Ausführungsbeispiele der Erfindung veranschaulicht. Dabei zeigen:

Fig. 1    eine schematische Darstellung einer Vorrichtung zur Herstellung eines Behälters mit Längsnaht, Abdeckstreifen und eingesetztem Boden in mehreren, aufeinanderfolgenden Bearbeitungsstufen;

Fig. 2    einen Längsschnitt durch eine weitere Vorrichtung zum Herstellen und Einbringen des Bodens in den unteren Behälterabschnitt;

Fig. 3    einen Querschnitt durch einen Behälter mit einer als Überlappungsnaht ausgebildeten Längsnaht, die an der Behälterinnenseite durch einen Kunststoff-Streifen abgedeckt ist;

Fig. 4    einen Querschnitt durch einen weiteren Behälter, dessen Längsnaht durch stumpf aneinanderstoßende Enden gebildet wird, wobei ein T-förmiger Streifen zur Abdeckung vorgesehen ist;

Fig. 5    einen weiteren Behälter-Querschnitt mit stumpfer Längsnaht und doppel-T-förmigem Kunststoff-Streifen und

Fig. 6    einen Längsschnitt durch einen Behälter mit eingesetztem Boden, der aus zwei Lagen gebildet ist.

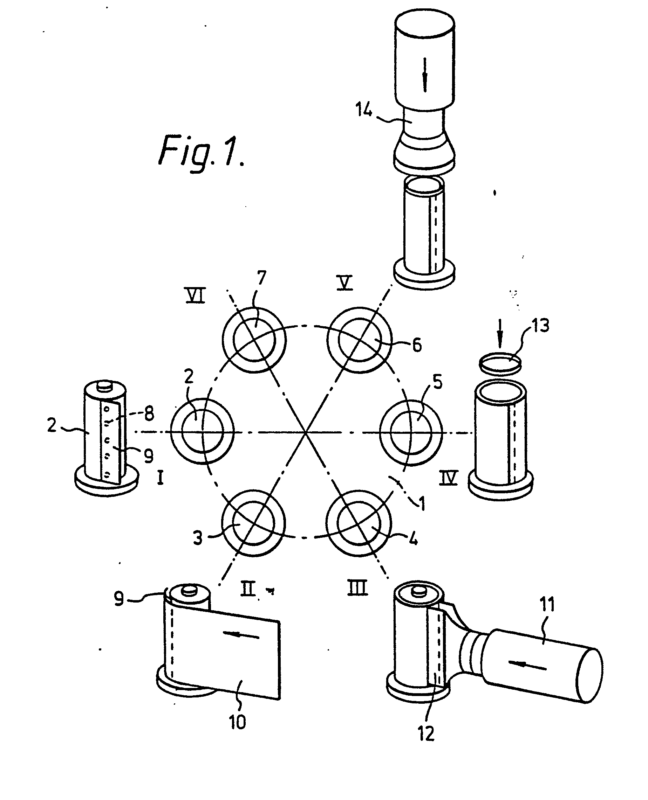

Die in Fig. 1 dargestellte Vorrichtung hat ein Karussell, das aus einem Drehteller 1 sowie sechs Dornen 2 bis 7 besteht. Jeder dieser Dorne steht zunächst in einer Karussell-Station I bis VI und wird bei jeder Drehung des Drehtellers 1 zur nächsten Station transportiert. Die Dorne haben an ihrer Außenfläche entlang einer Axiallinie angeordnete Saugöffnungen 8 (neben Station I schaubildlich dargestellter Dorn 2), an die in Station I in nicht näher dargestellter Weise ein Streifen 9 aus thermoplastischem Kunststoff bzw. mit einer solchen Oberfläche angelegt und durch den über die Saugöffnungen 8 wirkenden Unterdruck an der Dornoberfläche festgehalten wird.

Gleichzeitig wird dem Dorn 3 in Station II ein rechteckiger Kartonzuschnitt 10 zugeführt, dessen vorderes Ende über eine nicht dargestellte Klemmvorrichtung an der Dornoberfläche, und zwar im Bereich eines dort festgehaltenen Streifens 9, festgelegt wird. Darauf wird der Dorn gedreht, wodurch sich der Kartonzuschnitt 10 auf den Dorn aufwickelt. Die Oberflächen des Kartonzuschnittes sind mit einem thermoplastischen Kunststoff ausgerüstet. Dadurch ist es möglich, die beiden einander zugewandten Enden des Zuschnittes in einer Längsnaht zu versiegeln und gleichzeitig den Streifen 9 an der Innenseite des Behälters anzusiegeln und so die Längsnaht an dieser Innenseite abzudecken.

Zur Herstellung dieser Siegelnaht ist in der Station III dem Dorn 4 eine Ultraschall-Siegeleinrichtung 11 zugeordnet, deren Siegelwerkzeug 12 über die gesamte Länge der Siegel-Längsnaht reicht.

In der Karussell-Station IV befindet sich auf dem Dorn 5 eine fertige Behälter-Hülse, in die in hier nicht näher dargestellter Weise ein Boden 13 eingebracht wird.

In Station V wird über ein Werkzeug 14 der Behälterrand zusammen mit einem vom Boden abstehenden Rand umgebördelt und miteinander versiegelt. Der Dorn 6 dient dabei als Gegenwerkzeug für das Werkzeug 14.

In Station VI wird der fertige Behälter vom Dorn 7 abgenommen und kann beispielsweise einer nicht dargestellten Füllstation zugeführt werden.

Der in Station IV in den Behälter eingebrachte Boden 13 kann, wie in Fig. 1 angedeutet, fertig an diese Station angeliefert und dort nur in den Behälter eingesetzt werden. Es ist aber auch möglich, dieser Station IV eine Vorrichtung zum Herstellen des Bodens zuzuordnen.

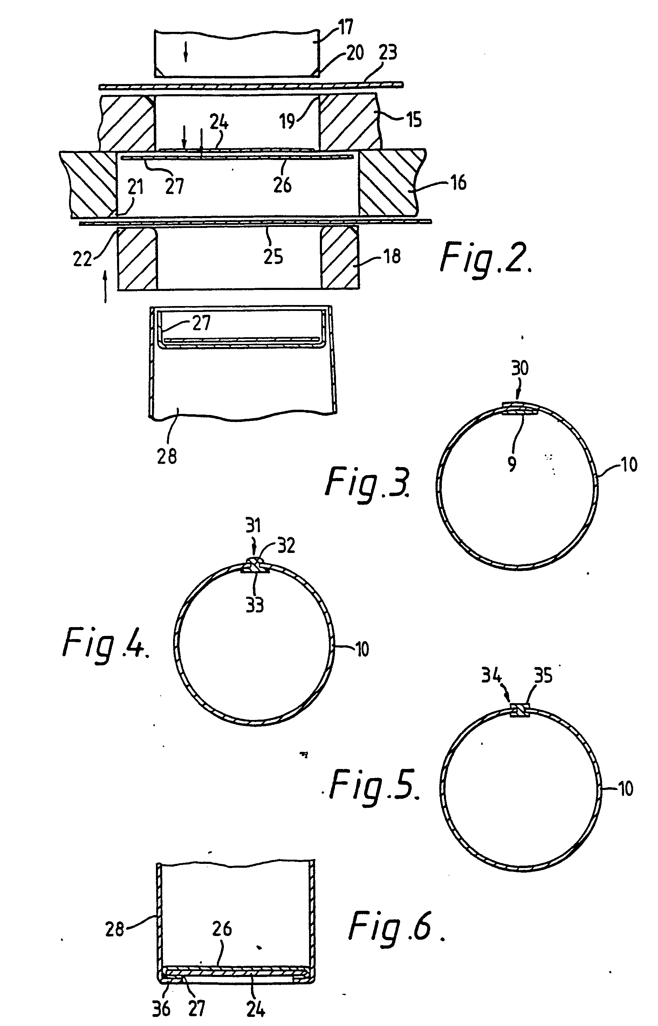

In Fig. 2 ist ein Ausführungsbeispiel einer derartigen Vorrichtung dargestellt. Sie besteht aus zwei Schneidringen 15 und 16, einem Stempel 17 sowie einem Stülpring 18. Die beiden Schneidringe 15, 16 liegen aneinander an, wobei eine feste Verbindung zweckmäßig erscheint. Beide Schneidringe sind stationär angeordnet, wobei der obere Schneidring 15 eine obere Schneidkante 19 aufweist, die mit einer Schneidkante 20 des Stempels 17 zusammenzuarbeiten vermag. Der untere Schneidring 16 hat eine untere Schneidkante 21, die ihrerseits mit einer am Außenumfang des Stülpringes 18 vorgesehenen Schneidkante 22 zusammenzuarbeiten vermag.

Zwischen dem Schneidring 15 und dem Stempel 17 läuft eine Kartonbahn 23 durch, aus der beim Absenken des Stempels 17 eine Kartonscheibe 24 ausgestanzt wird. Zwischen dem Schneidring 16 und dem Stülpring 18 läuft eine flexible Bahn 25, aus der beim Hochgehen des Stülpringes 18 ebenfalls eine Scheibe 26 ausgestanzt wird. Die flexible Bahn 25 bzw. die Scheibe 26 ist auf ihrer von der Scheibe 24 abgewandten Seite mit einer siegelbaren Schicht versehen.

Der Innendurchmesser des Stülpringes 18 ist geringfügig größer als der Außendurchmesser des Stempels 17. Dadurch ist es möglich, beim Zusammenfahren dieser beiden Werkzeugteile die Scheibe 26 mit ihrem über die Scheibe 24 überstehenden Rand 27 nach oben umzubiegen. Der so gestaltete Boden kann dann wie in Fig. 2 angedeutet unmittelbar mit Hilfe der beiden Werkzeugteile - Stempel 17 und Stülpring 18 - in das untere Ende eines Behälters 28 eingesetzt werden, der sich gerade in Station IV auf dem Dorn 5 befindet.

Es ist aber auch möglich, diese Vorrichtung zum Herstellen von Behälterböden räumlich getrennt von der Vorrichtung gemäß Fig. 1 anzuordnen und die fertigen Böden 13 der Station IV zuzuführen.

In den Figuren 3, 4 und 5 sind drei Ausführungsbeispiele für die Gestaltung der Längsnaht eines Behälters dargestellt. Beim Beispiel nach Fig. 3 sind die beiden Enden des Zuschnittes 10 zu einer Überlappungsnaht 30 übereinandergelegt. Auf der Behälterinnenseite ist diese Überlappungsnaht 30 durch einen ebenen Streifen 9 abgedeckt, der beiderseits der inneren freien Schnittkante des Kartonzuschnittes an diesen angesiegelt ist und damit die Schnittkante abdeckt.

Beim Ausführungsbeispiel gemäß Fig. 4 stoßen die freien Schnittkanten des Kartonzuschnittes 10 zur Bildung einer Längsnaht 31 unter Zwischenlage eines T-förmigen Kunststoff-Streifens 32 stumpf aneinander. Der Quersteg 33 des T-förmigen Streifens 32 liegt dabei an der Innenseite des Kartonzuschnittes 10 an und wird mit dieser Innenseite versiegelt, wodurch die Schnittkanten abgedeckt sind. Zusätzlich wird der außen überstehende, senkrechte Steg des T-förmigen Streifens beim Siegeln verquetscht und mit der Außenseite versiegelt.

Der senkrechte Steg kann jedoch auch so lang gewählt werden, daß er bündig mit der Außenseite abschließt.

Beim Ausführungsbeispiel gemäß Fig. 5 sind zur Bildung einer Längsnaht 34 die beiden freien Enden des Kartonzuschnittes 10 in die beiderseitigen Ausnehmungen eines doppel-T-förmigen Kunststoff-Streifens 35 eingeschoben. Beim Versiegeln werden die beiden Flansche dieses Streifens 35 mit der Innen- bzw. Außenseite des Behälters verbunden, wodurch die Schnittkanten des Zuschnittes sowohl von der Innenseite als auch von der Außenseite her verschlossen sind.

Ein Beispiel für eine mögliche Ausgestaltung des Bodens des Behälters 28 ist in Fig. 6 gezeigt. Der Rand 27 der flexiblen und siegelbar beschichteten Scheibe 26 ist beispielsweise mit Hilfe des Siegelwerkzeuges 14 an die Unterseite der Scheibe 24 angelegt. Gleichzeitig ist auch der Rand 36 des Behälters 28 nach innen umgelegt und an den Rand 27 angelegt und mit diesem versiegelt. Dadurch ergibt sich eine besonders flach ausgebildete Bodenkonstruktion.

Bei der Ausgestaltung der Längsnaht 30 als Überlappungsnaht ist es selbstverständlich auch möglich, wenigstens den innen liegenden Abschnitt der Naht anzuschrägen, so daß der in Fig. 3 dargestellte Hohlraumzwickel zwischen dem Streifen 9 und der Behälterwand entfällt. Diese Anschrägung kann auch an der Innenseite des äußeren Abschnittes vorgenommen werden. Speziell im Falle der Anschrägung, aber auch wenn die thermoplastische Beschichtung im Bereich der Naht vorhanden ist, oder auch wenn ein nicht beschichteter Karton verwendet wird, ist es zweckmäßig, ein Klebemittel zum Herstellen der Naht zu verwenden. Dieses Klebemittel sollte vorteilhafterweise durch den Einsatz von Ultraschall in seiner Abbindezeit beschleunigt werden können.

**Patentanspruch**

Verfahren zum Herstellen eines flüssigkeitsdichten Behälters aus einem im wesentlichen rechteckigen Kartonzuschnitt (10) od.dgl. mittels eines Karussells mit mehreren gleichen, drehbar gelagerten Dornen (2, 3, 4, 5, 6, 7), die je mit in einer Axiallinie am Umfang liegenden Saugöffnungen (8) versehen sind, wobei der Kartonzuschnitt (10) um einen Dorn (2, 3, 4, 5, 6, 7) gewickelt und längs einer Längsnaht durch Siegeln verschlossen wird und ebenfalls flüssigkeitsdicht mit einem aus einer versteifenden, die gesamte Bodenfläche einnehmenden Lage (24) und einer über die erste hinausragenden zweiten Lage (26) gebildeten Boden versehen wird, dadurch gekennzeichnet, daß an die Saugöffnungen (8) eines Dornes (2) in einer ersten Karussell-Station (I) ein flüssigkeitsbeständiger Streifen (9, 32, 35) angelegt wird, und daß in einer zweiten Karussell-Station (II) der Zuschnitt (10) für die Bildung des Behältermantels zugeführt und um den Dorn (3) gewickelt wird, wobei die Längsnaht des Behältermantels auf den vorher zugeführten Streifen (9, 32, 35) gelegt wird, daß in einer dritten Station (III) die Längsnaht in sich und mit dem eingelegten Streifen (9, 32, 35) versiegelt wird und in einer vierten Station (IV) der Boden (13) des Behälters eingebracht wird, dessen beide Lagen (24, 26) vorzugsweise als Bahnen (23, 25) zugeführt werden, aus denen zwei entsprechend dem Querschnitt des fertigen Bodens (13) gestaltete Scheiben (24, 26) ausgestanzt und umgeformt werden, und daß in einer fünften Station (V) der Boden (13) mit dem Behältermantel versiegelt wird.

**Claim**

Process for manufacturing a liquid-tight container from an essentially rectangular blank (10) made of board or a similar material, with the help of a carousel with a number of identical, pivoted mandrels (2, 3, 4, 5, 6, 7), each of which is provided on its circumference with an axial line of suction openings (8), the board blank (10) being wound around a mandrel (2, 3, 4, 5, 6, 7) and closed by sealing along a longitudinal seam and being provided with a base that is also liquid-tight and is formed from a strengthening layer (24), which covers the whole of the base area, and a second layer (26) which projects beyond the first layer, wherein a liquid-tight strip (9, 32, 35) is applied to rest against the suction openings (8) of a mandrel (2) in a first carousel station (I), wherein in a second carousel station (II) the blank (10) for production of the container body is fed in and wound around the mandrel (3), the longitudinal seam of the container body being placed on the strip (9, 32, 35) that has been fed in previously, wherein in a third station (III) the longitudinal seam is sealed together with the strip (9, 32, 35) and in a fourth station (IV) the base (13) of the container is fitted, the two layers (24, 26) of which are preferably fed in as webs (23, 25), from which two discs (24; 26) designed to correspond to the cross-section of the finished base (13) are cut and formed, and wherein the base (13) is sealed to the container body in a fifth station (V).

**Revendication**

Procédé de fabrication d'un récipient étanche aux liquides, façonné dans une découpe de carton (10) essentiellement rectangulaire, ou analogue, à l'aide d'un dispositif à plateau tournant (carrousel) comportant plusieurs broches identiques à paliers rotatifs (2, 3, 4, 5, 6, 7), chacune étant pourvue sur sa surface extérieure et dans une ligne axiale, de trous d'aspiration (8), la découpe de carton (10) s'enroule autour d'une broche (2, 3, 4, 5, 6, 7), est obturée par scellage sur toute la longueur du joint longitudinal et est également étanchéifiée par la pose d'un fond consistant en une épaisseur (24) qui couvre toute la surface du fond et la rigidifie, ainsi qu'en une seconde épaisseur (26) dont les bords dépassent ceux de la première, caractérisé par le fait que, dans la première station du carrousel (1) une bande imperméable (9, 32, 35) est appliquée sur les trous d'aspiration (8) d'une broche (2), que, dans la deuxième station du carrousel (II), la découpe (10) pour le formage des parois du récipient est amenée à la broche (3) et s'entoure autour d'elle, le joint longitudinal du corps du récipient se pose alors sur la bande amenée auparavant (9, 32, 35), que, dans une troisième station (III) s'effectue la soudure du joint longitudinal et son scellage à la bande (9, 32, 35), que, dans une quatrième station (IV), le fond (13) du récipient est inséré, fond dont les deux épaisseurs (24, 26) sont de préférence des bandes (23, 25) dans lesquelles deux disques (23, 25) formés en fonction de la coupe transversale du fond achevé (13) sont découpés et façonnés et que, dans une cinquième station (V), le fond (13) est scellé aux parois du récipient.

Fig.1.

0 038 488

1

Fig.2.

Fig.3.

Fig.4.

Fig.5.

Fig.6.